# EUROPÄISCHE PATENTSCHRIFT

(11) **EP 3 667 895 B1**
(45) Veröffentlichungstag und Bekanntmachung des Hinweises auf die Patenterteilung: **20.07.2022**
(21) Anmeldenummer: 19212007.9
(22) Anmeldetag: 28.11.2019
(51) Int. Cl.: H02P 3/22, H02P 25/18, H02P 29/024, H02P 9/04, H01H 50/32

(54) **SCHÜTZ ZUR BESCHLEUNIGTEN SCHWÄCHUNG DES LÄUFERFELDS EINER SYNCHRONMASCHINE**
CONTACTOR FOR ACCELERATED ATTENUATION OF THE ROTOR FIELD OF A SYNCHRONOUS MACHINE
DISPOSITIF DE PROTECTION DESTINÉ À UNE RÉDUCTION ACCÉLÉRÉE DU CHAMP DU ROTOR D'UNE MACHINE SYNCHRONE

(30) Priorität: 15.12.2018 RU 2018144751
(43) Veröffentlichungstag der Anmeldung: 17.06.2020
(73) Patentinhaber: Kravtsov, Gleb, Moskau 111024 (RU)
(72) Erfinder: Kravtsov, Gleb, Moskau 111024 (RU)
(74) Vertreter: Jeck, Anton

(56) Entgegenhaltungen:
- EP-A1- 1 536 442
- DE-C- 735 366
- GB-A- 191 120 534
- US-A1- 2014 175 882

## Beschreibung

Das Schütz betrifft das Gebiet der Elektrotechnik. Es gehört zu den Erregersystemen für Synchronmaschinen, und zwar zu den Vorrichtungen zur Schwächung des Läuferfelds in Synchronmaschinen. Die Schwächungszeit (Löschzeit) ist kritisch. Von diesem Parameter hängt der Umfang der Beschädigungen einer Synchronmaschine im Falle eines Kurzschlusses in Ständerkreisen ab. Der durch die Anwendung der Erfindung zu erreichende technische Effekt besteht darin, eine einfache und zuverlässige Vorrichtung vorzuschlagen, mit der eine minimale Schwächungszeit (Löschzeit) des Magnetfelds einer Synchronmaschine sichergestellt werden kann.

Die technische Aufgabe der Feldschwächung besteht darin, die Energie des Magnetfelds dem Läufer schnell zu entnehmen oder sie zurück zur Stromquelle zu führen. Ein klassisches Verfahren der Feldschwächung besteht in der Abschaltung der Erregerwicklung der Synchronmaschine von der Stromquelle und der Umschaltung dieser auf einen Widerstand. Infolgedessen erfolgt die Energiezerstreuung des Magnetfelds in Form von Wärme. Der Vorgang ist dabei nicht optimal, weil die Widerstandsgröße eine Konstante ist. Dadurch wird eine maximale Energiezerstreuung nur im Anfangsmoment sichergestellt, wenn der maximale Strom der Läuferwicklung und die maximale Spannung der Läuferisolation vorliegen. Mit der Stromabnahme kommt eine Spannungssenkung zustande. Dies ist aufgrund eines konstanten Widerstandswerts des Schwächungswiderstands möglich. Die Spannungssenkung führt dazu, dass sich die Menge der am Widerstand freigesetzten Energie verringert. Der Vorgang der Feldschwächung verzögert sich.

Um die Feldschwächung zu beschleunigen, können nichtlineare Widerstände (Varistoren) im Löschkreis eingesetzt werden. Diese sorgen für eine quasistabile Spannung in einem bestimmten Strombereich. Diese Lösung ist im Patent RU 134373 "Vorrichtung zur Generatorfeldschwächung" offenbart. Jedoch aus einer Reihe von Gründen haben nichtlineare Widerstände keine breite Anwendung gefunden. Zu diesen Gründen gehören unter anderem auch die Kostspieligkeit, bedeutende Abmessungen, wesentliche Parameterinstabilität und -streuung.

Nach wie vor wird der Lichtbogen als das wirksamste Verfahren zur Schwächung des Läuferfelds (Löschung der Energie des Läuferfelds) angesehen. Der Grund dafür ist ein nichtlineares Brennverhalten des Lichtbogens. Der Lichtbogen wird dabei in einem speziellen elektrischen Gerät erzeugt.

Im Dokument EP 1 536 442 A1 ist eine modulare elektromagnetische Schützanordnung mit mehreren Schützen beschrieben, die unabhängig voneinander gesteuert werden können, so dass negative Drehmomentschwingungen minimiert werden können und bei der jedes Schütz so aufgebaut ist, dass es unter Fehlerbedingungen höheren Strömen ohne erhöhte Komplexität und Größe des Schützes standhält. Die modulare Schützanordnung umfasst mehrere stationäre Kontakte und mehrere bewegliche Kontakte, die in einer einzelnen Schützanordnung untergebracht sind; eine Vielzahl von Betätigungsanordnungen, von denen jede in betriebsfähiger Verbindung mit mindestens einem beweglichen Kontakt steht; und eine Steuerung in betriebsfähiger Verbindung mit der Vielzahl von Betätigungsanordnungen und konfiguriert, um zu bewirken, dass weniger als alle mehreren beweglichen Kontakte in Eingriff kommen als weniger als alle mehreren stationären Kontakte, wenn die Steuerung ein Befehlssignal erhält einen geschlossenen Kreislauf herzustellen.

Das Dokument GB 20534 A beschreibt eine Schaltung mit Schützen, die eine Reihenschaltung der Wicklungen der Schütze mit Widerständen, mit einer Spannungsquelle und einer Erregerwicklung eines Läuferstromkreises einer Synchronmaschine aufweist, bei der bei Zunahme der Drehzahl und gleichzeitiger Verringerung des Läuferstroms nacheinander die Kontakte der Schütze geschlossen werden und so der Läuferstrom zur Feldstärkung der Synchronmaschine wieder stufig erhöht wird.

Derzeit kann ein Feldschwächungsschalter (Feldschwächungsautomat) als eine technisch fortschrittliche Vorrichtung zur Feldschwächung genannt werden. Diese Vorrichtung wurde von Osip Bron entwickelt [1]. Eine ähnliche Vorrichtung wird von "General Electric" unter der Marke "Gerapid" hergestellt. Diese weist ein vereinfachtes Lichtbogenbrennverhalten auf. Mit Aufkommen der Halbleiter-Gleichstromumformer wird es möglich, die Feldschwächung durch die Überführung des einspeisenden Umformers in den Wechselrichterbetrieb zu erreichen. Der Umformer speist die Wicklung. Im Läufer wird magnetische Energie gespeichert. Ein Halbleiterstromrichter führt diese Energie ins Stromnetz zurück. Dieses Verfahren hat am Ende des 20. Jahrhunderts breite Anwendung gefunden. Es ermöglichte eine schnelle lichtbogenfreie Feldschwächung. Dennoch hatte dieses Verfahren einen wesentlichen Nachteil. Der Nachteil bestand in Folgendem: Wenn eine Beschädigung im Nahfeld der Synchronmaschine entsteht, kann das Wechselrichten wegen der Primärspannung-Verzerrungen nicht stattfinden. Dabei fließt die dem Läufer entnommene Energie zur beschädigten Stelle. Dadurch wird die Notfallsituation erschwert. Das ist der Grund, warum das konventionelle Verfahren der Feldschwächung durch einen Widerstand bis heute breite Anwendung findet. Es stellt einen maximal zuverlässigen Ablauf des Vorgangs (der Feldschwächung) sicher. Dabei kann die Schwächungszeit (Löschzeit des Magnetfelds) ziemlich stark variieren. Der Grund dafür ist wie folgt: Im Läuferfeld wird Energie gespeichert. Diese ist der zweiten Potenz der Läuferstromstärke proportional. Generatoren können mit einem Hochlauf betrieben werden. Im Hochlauf ist beim Läufer ein Doppelstrom möglich. Auf Grund dessen kann die zu löschende Energiemenge um das Vierfache variieren. So werden Lösungen entwickelt, die mit der Änderung der Schwächungswiderstandsgröße verbunden sind. Die Änderung erfolgt durch die Schaltung der Teile des Schwächungswiderstands. Eine dieser Lösungen ist im Patent RU 2282925 "Verfahren und Vorrichtung zur Feldschwächung der Erregerwicklung in einer Synchronmaschine (Ausführungsformen)" beschrieben. In dieser Lösung kommen die Thyristorschaltung des Widerstands und ein Logikblock zum Einsatz. Mittels eines Logikblocks wird eine elektronische Schaltung für die Thyristorsteuerung umgesetzt. Diese Lösung wird zum Prototyp gewählt, weil in der vorgeschlagenen Erfindung auch die Idee einer stufenweisen Schaltung des Widerstands im Zuge der Schwächung realisiert wird. Die Hauptunterschiede der Erfindung zum Prototyp ermöglichen es, eine hohe Zuverlässigkeit und einfache Realisierung der Erfindung sicherzustellen. Das technische Problem wird durch das in Anspruch 1 definierte Schütz gelöst. Zu den Hauptunterschieden der Erfindung zum Prototyp gehören:
1. die Anwendung eines Schützes in einer Sonderausführung. Diese Ausführung sieht mehrere Stäbe vor. Der Läuferstrom fließt um die Wicklung des Schützes. Die Einschaltmomente von mehreren vorhandenen Kontaktgruppen stehen in striktem Zusammenhang mit der Läuferstromstärke;
2. das Fehlen von Steuerschaltungen. Zum Hauptvorteil des Schützes gehört seine einfache Konstruktion. Diese Konstruktion weist eine minimale Zahl an Elementen auf. Die Elemente haben stabile und leicht überprüfbare Parameter. Die Außenfaktoren, wie elektromagnetische Störungen, radioaktive Strahlung, Temperaturverhältnisse und Feuchtigkeit, haben keine wesentliche Einwirkung auf das Schütz. Andere Vorteile der Erfindung sind stabile Parameter und die Möglichkeit, diese bei periodischen Überprüfungen und während des Betriebs zu kontrollieren.

Die Neuheit der Erfindung besteht darin, dass die Konstruktion des Schützes sämtliche notwendige Elemente aufweist, die für eine schnelle und sichere Feldschwächung erforderlich sind. Der Konstruktion liegen ein eigentümlicher Magnetkörper mit mehreren Stäben und eine Wicklung zugrunde. Die Wicklung ist auf dem Magnetkörper verteilt. Diese Lösung ist nicht vorbekannt.

Das Wesen der Erfindung wird anhand von Zeichnungen näher erläutert. Es zeigen:
- Fig. 1: das Aufbauschema des Schützes,
- Fig. 2 und Fig. 3: den Schaltplan der Schützschaltung im Läuferkreis einer Synchronmaschine,
- Fig. 4: die Simulationsergebnisse der Verteilung von magnetischen Flüssen im Magnetkörper des Schützes,
- Fig. 5: die grafische Darstellung der Läuferstromverminderung bei der Anwendung des Schützes und ohne Schütz und
- Fig. 6: die Spannungen auf der Erregerwicklung bei der Anwendung des Schützes und ohne Schütz.

Diese Figuren zeigen ein Beispiel der Umsetzung der Erfindung mit einem Schütz, der vier Kontaktgruppen aufweist. Es sei darauf hingewiesen, dass die Anzahl der Stäbe mit einem Luftspalt und dementsprechend die Anzahl der Kontaktgruppen für die Realisierung der Erfindung mindestens zwei sein soll. Je mehr Kontaktgruppen einbezogen sind, desto höher ist die Schwächungs-Geschwindigkeit des Läuferfelds.

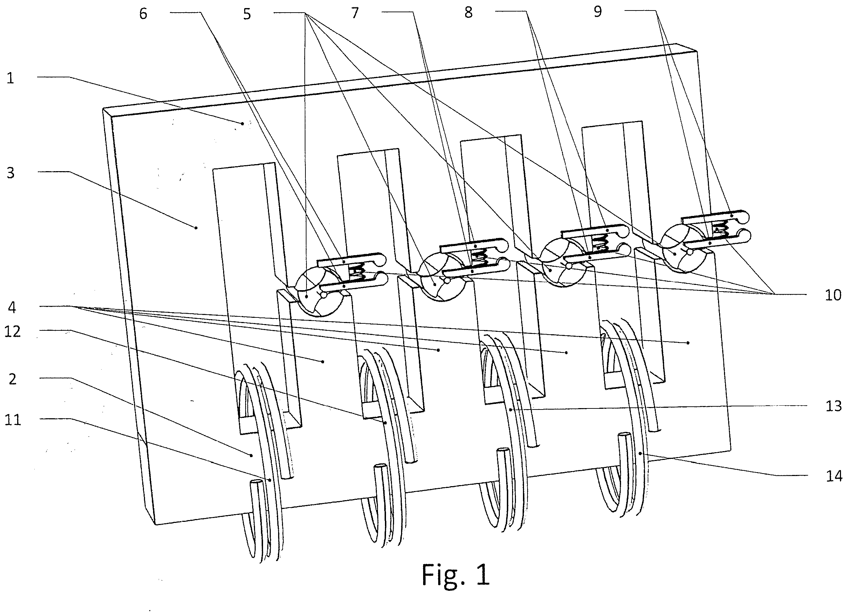

In der Erfindung (Fig. 1) wird ein Magnetkörper aus magnetisch weichem Werkstoff mit mehreren Stäben angewendet. Der Magnetkörper besteht aus einem unbelasteten Joch 1 und einem Joch 2 mit Wicklungen. Diese sind untereinander mit einem ununterbrochenen Stab (Vollstab) 3 und Stäben 4 verbunden. Die Stäbe 4 weisen einen Luftspalt auf. In diesem befinden sich bewegliche Teile des Stabs 5. Sie ändern ihre Lage je nach der Stärke des magnetischen Flusses. Der magnetische Fluss fließt durch den Stab. Der bewegliche Teil 5 des jeweiligen Stabs 4 ist mit einem beweglichen Kontakt seiner Kontaktgruppe verbunden. Die Kontaktgruppen 6, 7, 8 und 9 sind an Schwächungswiderstands-Sektionen angeschlossen. Fließt kein magnetischer Fluss über den Stab, bleibt der bewegliche Teil des Magnetkörpers in der Ausgangsposition. In dieser Position ist der Luftspalt beim Verlauf des magnetischen Flusses maximal. Wird der magnetische Fluss, der über den Stab fließt, stärker, löst er eine Kraft aus. Diese Kraft wirkt darauf hin, die Lage des beweglichen Teils so zu verändern, dass der Luftspalt kleiner wird. Im Schütz-Aufbau sind Federn 10 vorgesehen. Die Federn 10 verhindern die Änderung der Lage der beweglichen Teile unter der Wirkung der magnetischen Kraft (des Magnetismus). Die Federn wirken auf den beweglichen Teil darauf hin, den beweglichen Teil in die Ausgangslage bei fehlendem magnetischem Fluss zurückzuführen. Erreicht der magnetische Fluss, der über den Stab fließt, einen höheren Wert, verschiebt sich der bewegliche Teil des Stabs. Auf diese Weise führt der bewegliche Teil in seiner Kontaktgruppe einen Kontaktschluss herbei. Bei einem geringeren Wert des magnetischen Flusses genügt die wirkende Kraft nicht, um der Feder entgegenzuwirken. Deswegen führt die Feder den beweglichen Teil in die Ausgangslage zurück. Dies bewirkt die Kontaktöffnung in der entsprechenden Kontaktgruppe. Somit wird der Status der Kontakte in der jeweiligen Gruppe durch die Stärke des magnetischen Flusses bestimmt. Dieser strömt dabei über den Stab, der mit der Gruppe verbunden ist. Der bewegliche Teil kann sich sowohl hin- und hergehend als auch drehend bewegen. Das ist kein wesentliches Merkmal für die Realisierung der Erfindung. Der Läuferstrom umfließt die Wicklungen 11, 12, 13 und 14. Sie sind auf dem Joch des Magnetkörpers zwischen den Stäben angeordnet. Dies führt dazu, dass die magnetische Spannung mit jeder nachfolgenden Wicklung entlang des Jochs in Richtung des ununterbrochenen Stabs hin größer wird. Die magnetische Spannung wird durch den Läuferstrom erzeugt. Sie führt in jedem nachfolgenden Stab einen stärkeren magnetischen Fluss herbei. So entsteht eine Abhängigkeit der Anzahl der geschlossenen Kontaktgruppen von der Läuferstromstärke. Die Wicklungen können sowohl hintereinander als auch parallel geschaltet sein. Die Anzahl der Wicklungen entspricht der Anzahl der Kontaktgruppen. Die Wicklungen sind zusammengeschaltet und entlang des Jochs in den Bereichen zwischen den Stäben verteilt. Durch die Variierung (Abstimmung) der Luftspalte und der Anzahl der Windungen können erforderliche Parameter erreicht werden. Diese Parameter stellen eine Abhängigkeit der Anzahl der geschlossenen Kontakte vom Strom dar.

Die Wicklungen können sowohl parallel als auch hintereinander geschaltet sein.

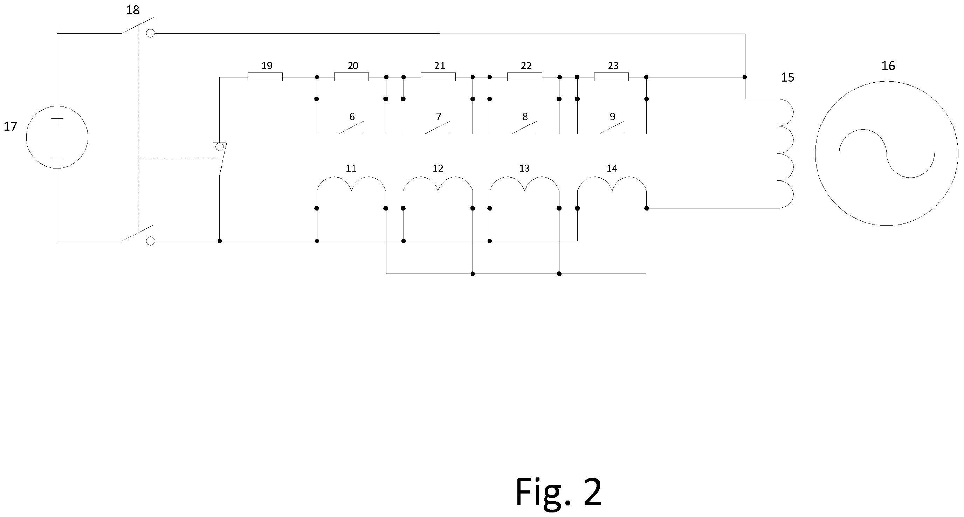

Die Fig. 2 zeigt eine parallele Schaltung der Schützwicklungen. Diese Art der Schaltung ist für hochleistungsfähige Synchronmaschinen bevorzugt. In diesem Fall sind die Wicklungen für eine hohe Stromstärke nötig. Diese sind schwierig herzustellen. Der Läuferstrom verteilt sich dabei gleichmäßig über die Wicklungen. Seine maximale Stärke vermindert sich gleich einem Vielfachen der Anzahl der Wicklungen. Dies ermöglicht eine kompaktere Ausführung der Wicklungen für geringere Stromwerte.

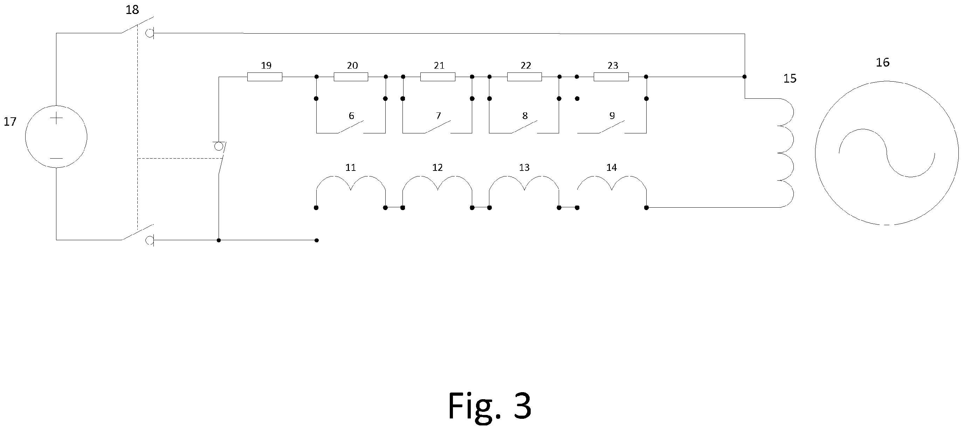

Fig. 3 zeigt eine Hintereinanderschaltung. Sie ist einfacher in der Umsetzung und wird bei geringen Läuferstromwerten empfohlen. In Fig. 2 und Fig. 3 ist die Wicklung 15 der Synchronmaschine 16 an eine Anregungsquelle 17 über die Kontakte des Schützes 18 angeschlossen. Die Kontakte sind Schließkontakte. Das Schütz 18 ist ein konventionelles Schütz. Es setzt die Feldschwächung durch einen Widerstand um und hat drei mechanisch verbundene Kontakte: zwei Schließkontakte für den Anschluss der Läuferwicklung an eine Anregungsquelle und einen dritten Öffnungskontakt. Dieser letztere dient zum Anschluss des Schwächungswiderstands an die Läuferwicklung. Schütze des Typs 18 werden industriell hergestellt und weisen keine besonderen Merkmale auf. Der Schwächungswiderstand besteht aus den hintereinander geschalteten Widerstandssektionen 19, 20, 21, 22 und 23. Bei Notabschaltungen wird die Energie des Magnetfelds am Widerstand in Wärme umgewandelt. Diese Energie ist im Läufer gespeichert. Die Erfindung ist anhand der Kontaktgruppen 6, 7, 8 und 9 und der Wicklungen 11, 12, 13 und 14 dargelegt. Bei dem Durchgang des Läuferstroms über die Wicklungen 11, 12, 13 und 14 wird magnetische Spannung erzeugt. Diese löst magnetische Flüsse in den Stäben des Magnetkörpers aus. Diese magnetischen Flüsse unterscheiden sich stufenartig voneinander. Bei der Erläuterung der Figuren wird angenommen, dass die Kontakte der Kontaktgruppen 6, 7, 8 und 9 beim Ansteigen der Läuferstromstärke aufeinanderfolgend auslösen. Dabei löst der Kontakt 9 bei der minimalen Stromstärke aus. Der Kontakt 6 löst bei einer Stromstärke aus, die dem höchsten berechneten Wert naheliegt. Funktioniert eine Synchronmaschine im Normalbetrieb, wird die Spannung von der Anregungsquelle 17 auf die Läuferwicklung beim Einschalten des Schützes 18 angelegt. Der Öffnungskontakt des Schützes 18 öffnet sich. Dadurch wird der Kreis der hintereinander geschalteten Schwächungs-widerstände 19, 20, 21, 22 und 23 abgeschaltet. Je nach der Betriebsart der Synchronmaschine erzeugt die Stromquelle einen Läuferstrom erforderlicher Stärke. Der Durchgang des Läuferstroms über die Wicklungen 11, 12, 13 und 14 führt dazu, dass sich die Kontakte 6, 7, 8 und 9 schließen. Dabei legen sie die Widerstände 20, 21, 22 und 23 in den Nebenschluss (s. unten). Infolgedessen wird der Widerstandswert des Schwächungskreises (Löschkreises) bei der maximalen Läuferstromstärke durch den Wert des Widerstands 19 bestimmt. Geht ein Befehl zur Feldschwächung der Synchronmaschine ein, schalten die Hauptkontakte des Schützes 18 die Stromquelle vom Läufer ab. Dabei schaltet der geschlossene Öffnungskontakt des Schützes 18 den Läufer an den Kreis des Schwächungswiderstands an. Der Wert des Widerstands 19 ist so zu wählen, dass die Spannung an den Anschlüssen der Läuferwicklung maximal möglich ist. Dabei soll die Spannung ungefährlich für die Läuferisolation bei der maximalen Läuferstromstärke sein. In der Anfangsphase der Feldschwächung ist die Stromstärke maximal. Zu diesem Zeitpunkt wirkt nur der Widerstand 19 im Schwächungskreis. Die anderen Widerstände sind durch die Kontakte 6, 7, 8 und 9 in den Nebenschluss gelegt (geshuntet). Mit der Zerstreuung der Läuferenergie verringert sich die Stromstärke. Infolge der Verringerung der Stromstärke öffnet sich der Kontakt 6. Der Grund dafür ist, dass dieser Kontakt durch den beweglichen Teil des Stabs des Magnetkörpers betätigt wird. Dieser Stab weist einen minimalen magnetischen Fluss auf. Nach dem Öffnen des Kontakts 6 beginnt der Läuferstrom im Schwächungskreis zu fließen. Der Schwächungskreis besteht aus den Widerständen 19 und 20. Die Erhöhung des Kreiswiderstands führt zur Erhöhung der Spannung an der Wicklung. Dies ermöglicht es, bei der Verringerung der Stromstärke die Verringerung der zerstreuten Leistung auszugleichen (kompensieren). Außerdem kann die Feldschwächung beschleunigt werden. Falls sich die Stromstärke weiter verringert, öffnet sich der Kontakt 7. Dabei wird der Widerstand 21 in den Schwächungskreis eingeschaltet. Falls sich die Stromstärke noch mehr verringert, öffnet sich der Kontakt 8. Dabei wird der Widerstand 22 in den Schwächungskreis eingeschaltet. Der Kontakt 9 öffnet sich zuletzt. Dies erfolgt im Zuge der Feldschwächung. Stabile Parameter der Betätigung und der Rückstellung der Kontakte 6, 7, 8 und 9 ermöglichen es, je nach der Läuferstromstärke die Werte der Widerstände 20, 21, 22 und 23 so zu wählen, dass die Werte der Läuferspannungen den für diesen Strom maximalen Werten naheliegen. Dadurch werden eine beschleunigte Zerstreuung der magnetischen Energie des Läufers und eine beschleunigte Feldschwächung der Synchronmaschine sichergestellt. Der Vorgang der Feldschwächung endet bei dem höchsten Wert des Schwächungswiderstands. Der Schwächungswiderstand ist dabei an die Wicklung des Läufers angeschlossen.

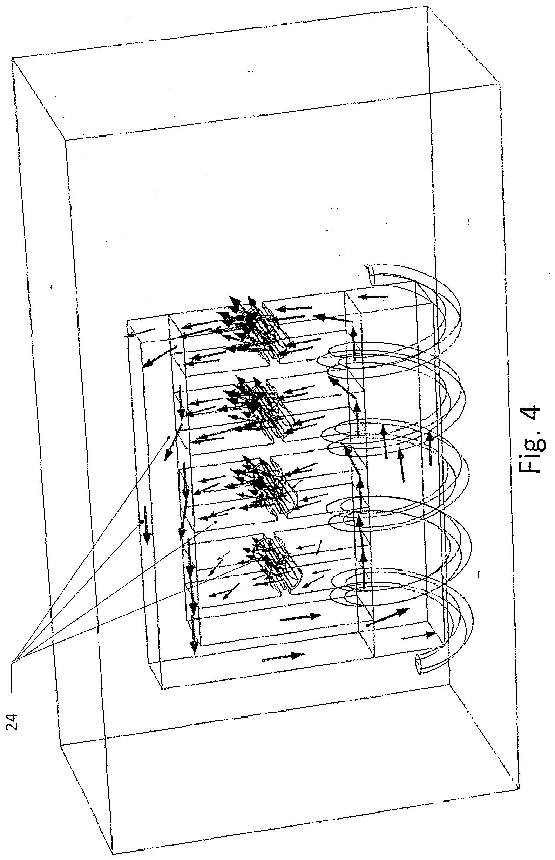

Fig. 4 zeigt einen Auszug der Ergebnisse einer mathematischen Modellierung und Simulation. Diese wurden in Bezug auf die räumliche Verteilung von magnetischen Flüssen im Magnetkörper des Schützes vorgenommen. Die Score-Vektoren 24 zeigen die Größe eines magnetischen Flusses im Magnetkörper. Die Richtung der Vektoren stimmt mit der Richtung des magnetischen Flusses überein. Die Größe des Vektors ist seinem Betrag proportional.

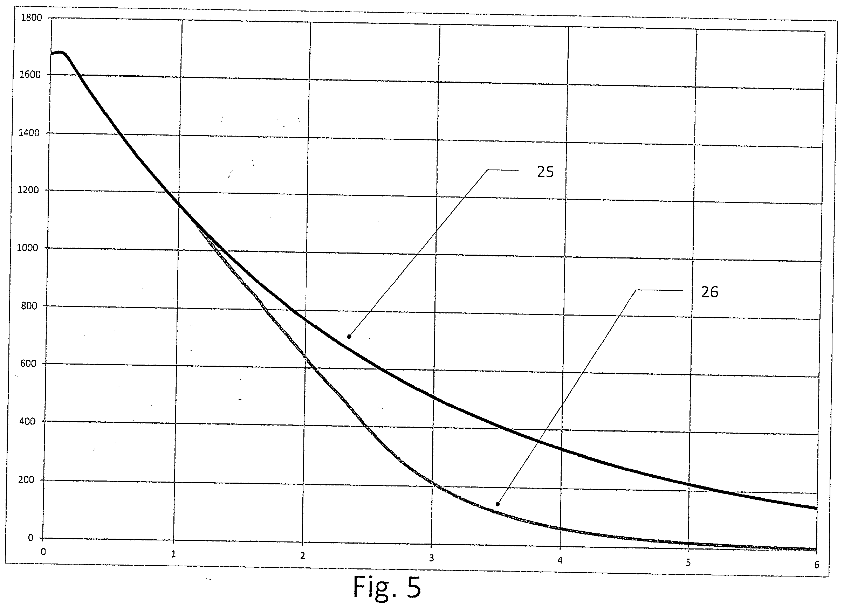

In Fig. 5 ist die Berechnung der Änderungen der Läuferstromstärke in einem Synchrongenerator grafisch dargestellt. Gezeigt ist die Änderung in einem klassischen Fall der Feldschwächung durch den Widerstand 25 und bei der Anwendung der Erfindung 26. Der Vergleich der Kennlinien zeigt, dass die Zeit für die Feldschwächung bei der Anwendung der Erfindung wesentlich verkürzt werden kann.

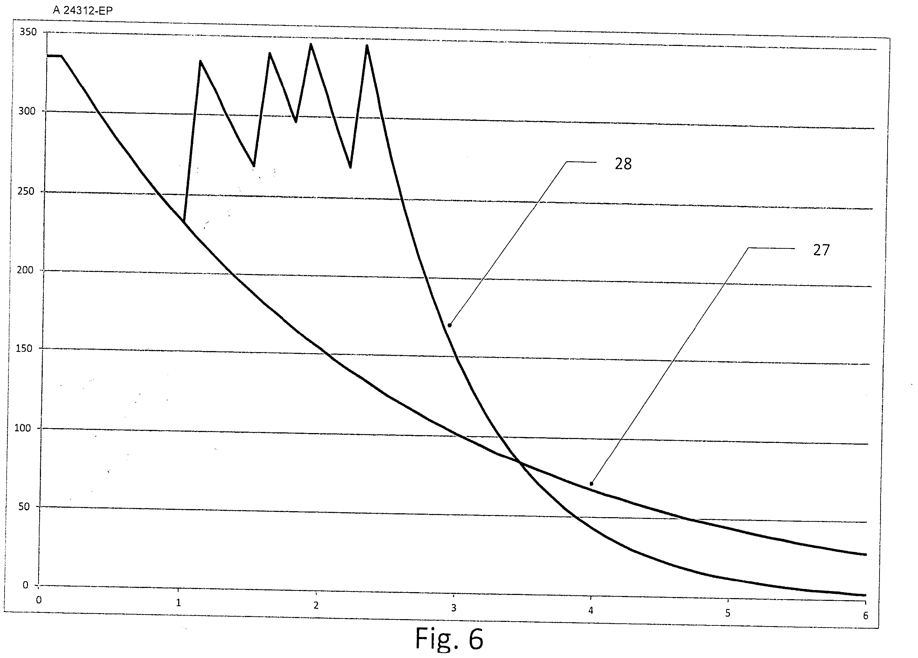

In Fig. 6 sind die Berechnungen der Läuferspannung in einem Synchrongenerator grafisch dargestellt. Gezeigt ist die Spannung in einem klassischen Fall der Feldschwächung durch den Widerstand 27 und bei der Anwendung der Erfindung 28. Der Vergleich der Kennlinien zeigt, dass bei der Anwendung der Erfindung die Spannungswerte zum Zeitpunkt der Abschaltung der Kontakte sprungartig wachsen.

Dadurch wird ein Spannungswert erhalten, der dem maximal möglichen Wert naheliegt. Dies beschleunigt die Feldschwächung.
- Fig. 1: Aufbauschema des Schützes. Die Bezugszeichen auf dem Schema bezeichnen:
1 unbelastetes Joch des Magnetkörpers
2 Joch des Magnetkörpers mit Wicklungen
3 ununterbrochener Stab (Vollstab) des Magnetkörpers
4 Stäbe des Magnetkörpers mit Luftspalten
5 bewegliche Teile der Stäbe des Magnetkörpers mit Luftspalten
6, 7, 8 und 9 Kontaktgruppen. Diese bestehen jeweils aus einem unbeweglichen Kontakt und einem beweglichen Kontakt. Der bewegliche Kontakt ist dabei mit dem beweglichen Teil des Stabs verbunden
10 Federn
11, 12, 13 und 14 Wicklungen
- Fig. 2: Schaltplan der Schützschaltung in den Läuferkreis einer Synchronmaschine mit parallel geschalteten Schützwicklungen
Die Bezugszeichen auf dem Schema bezeichnen:
15 Erregerwicklung, angeordnet am Läufer einer Synchronmaschine
16 Anregungsquelle einer Synchronmaschine
17 Schwächungsschütz mit zwei mechanisch verbundenen HauptSchließkontakten und einem Öffnungskontakt; die Haupt-Schließkontakte schalten den Läufer von der Anregungsquelle ab; der Öffnungskontakt dient zum Anschluss des Läufers an einen Schwächungswiderstand
19, 20, 21, 22 und 23 Sektionen des Schwächungswiderstands
6, 7, 8 und 9 Kontaktgruppen des Schützes zur beschleunigten Schwächung des Läuferfelds
11, 12, 13 und 14 Wicklungen des Schützes zur beschleunigten Feldschwächung des Läufers
- Fig. 3: Schaltplan der Schützschaltung in den Läuferkreis einer Synchronmaschine mit hintereinander geschalteten Schützwicklungen
Die Bezugszeichen auf dem Schema bezeichnen:
15 Erregerwicklung, angeordnet am Läufer einer Synchronmaschine
16 Anregungsquelle einer Synchronmaschine
17 Schwächungsschütz mit zwei mechanisch verbundenen HauptSchließkontakten und einem Öffnungskontakt; die Haupt-Schließkontakte schalten den Läufer von der Anregungsquelle ab; der Öffnungskontakt dient zum Anschluss des Läufers an einen Schwächungswiderstand
19, 20, 21, 22 und 23 Sektionen des Schwächungswiderstands
6, 7, 8 und 9 Kontaktgruppen des Schützes zur beschleunigten Schwächung des Läuferfelds
11, 12, 13 und 14 Wicklungen des Schützes zur beschleunigten Schwächung des Läuferfelds
- Fig. 4: Auszug der Ergebnisse einer mathematischen Modellierung und Simulation. Diese wurden in Bezug auf die räumliche Verteilung von magnetischen Flüssen im Magnetkörper des Schützes vorgenommen.
Die Bezugszeichen auf dem Modellausschnitt bezeichnen:
24 Score-Vektoren. Diese sind dem Modell des Magnetkörpers einbeschrieben. Sie zeigen die Größe des magnetischen Flusses im Magnetkörper. Die Größe des Vektors ist der Größe des strömenden magnetischen Flusses im Punkt der Anordnung des Vektors proportional.

- Fig. 5: grafische Darstellung der zeitlichen Änderung der Läuferstromstärke in einem Synchrongenerator. Die horizontale Achse ist eine Zeitachse. Der Ursprung ist der Zeitpunkt der Abschaltung von der Anregungsquelle. An der vertikalen Achse ist die Stromstärke der Läuferwicklung dargestellt.
Die Kennlinien zeigen:
25 grafische Darstellung der Änderung der Läuferstromstärke bei der Anwendung eines konventionellen Verfahrens der Feldschwächung durch Widerstand
26 grafische Darstellung der Änderung der Läuferstromstärke bei der Anwendung der Erfindung.
- Fig. 6: grafische Darstellung der zeitlichen Änderung der Läuferspannung in einem Synchrongenerator. Die horizontale Achse ist eine Zeitachse. Der Ursprung ist der Zeitpunkt der Abschaltung von der Anregungsquelle. An der vertikalen Achse ist die Spannung an den Anschlüssen der Läuferwicklung dargestellt.
27 grafische Darstellung der Änderung der Läuferspannung bei der Anwendung eines konventionellen Verfahrens der Feldschwächung durch Widerstand
28 grafische Darstellung der Änderung der Läuferspannung bei der Anwendung der Erfindung

Die Erfindung kann mittels konventioneller Anlagen und Verfahren umgesetzt werden. Diese Anlagen und Verfahren sind in der elektrotechnischen Industrie bekannt. Sie werden für die Entwicklung von elektrischen Geräten eingesetzt. Die Anwendung des erprobten Verfahrens zur Lichtbogenlöschung an Kontakten im Vakuum hat in Bezug auf die Erfindung besonders gute Erfolgsaussichten. Die Anwendung in der Erfindung von gut bekannten und erprobten Verfahren ermöglicht, die Erfindung innerhalb kürzester Zeit im industriellen Umfang umzusetzen. Die Funktionsfähigkeit der Erfindung ist durch ein digitales Modell bestätigt. Dieses Modell wurde mit einer Software erstellt. Die Software realisiert eine solide Modellierung von elektromagnetischen Feldern.

### Informationsquellen:

1. O.B. Bron. Feldschwächungsautomaten, Gosenergoisdat, 1961.
2. Patent RU 2282925 "Verfahren und Vorrichtung zur Feldschwächung der Erregerwicklung in einer Synchronmaschine (Ausführungsformen)".
3. Patent RU 134373 "Vorrichtung zur Generatorfeldschwächung".

## Patentansprüche

1. Schütz zur Schaltung von Widerstandselementen (20-23) der Feldschwächung in einer Synchronmaschine (16), das zwei oder mehr Kontaktgruppen umfasst, die durch die Verlagerung von beweglichen Teilen (5) von Stäben (4) eines Magnetkörpers des Schütz gesteuert werden,
**dadurch gekennzeichnet,**
**dass** im Magnetkörper mehrere Stäbe (3, 4) vorgesehen sind,
**dass** der Magnetkörper so ausgelegt ist, dass die magnetische Spannung mit jedem nachfolgenden Stab (3, 4) des Magnetkörpers mit mehreren Stäben (3, 4) stufenartig größer wird, wobei die magnetische Spannung die beweglichen Teile (5) verschiebt,
**dass** diese Spannung beim Durchgang des Läuferstroms durch parallel oder hintereinander geschaltete Wicklungen (11-14) auf dem Magnetkörper erzeugt wird,
**dass** die Wicklungen am Magnetkörper zwischen den Stäben angeordnet sind und dass die magnetische Spannung durch stufenweise Schaltung der Widerstandselemente eine Stufenlinie, also ein stufenartiges Verhalten der Kontaktschließung und der Kontaktöffnung je nach der Läuferstromstärke, erzeugt, wobei die Stäbe (4) einen Luftspalt aufweisen, in welchem sich bewegliche Teile (5) des Stabs (4) befinden, wobei der bewegliche Teil (5) des jeweiligen Stabs (4) mit einem beweglichen Kontakt seiner Kontaktgruppe (6, 7, 8, 9) verbunden ist.

## Claims

1. Contactor for switching resistive elements (20-23) of field weakening in a synchronous machine (16), comprising two or more contact groups controlled by the displacement of movable parts (5) of rods (4) of a magnetic body of the contactor,
**characterised in that**
that several rods (3, 4) are provided in the magnet body,
**in that** the magnetic body is designed such that the magnetic voltage increases in a step-like manner with each successive rod (3, 4) of the magnetic body having a plurality of bars (3, 4), the magnetic voltage displacing the movable parts (5),
that this voltage is generated when the rotor current passes through windings (11-14) connected in parallel or in series on the magnet body,
**in that** the windings on the magnet body are arranged between the bars and **in that** the magnetic voltage produces a step line, i.e. a step-like behaviour of the contact closure and the contact opening depending on the rotor current strength, by stepwise switching of the resistance elements, the bars (4) having an air gap in which movable parts (5) of the rod (4) are located, wherein the movable part (5) of the respective rod (4) is connected to a movable contact of its contact group (6, 7, 8, 9).

## Revendications

1. Protection pour la commutation d'éléments résistifs (20-23) de shuntage de champ dans une machine synchronisante (16) comportant deux ou plus de groupes de contact guidés par le biais de la délocalisation des parties déplaçables (5) de tiges (4) d'un corps magnétique de la protection est **caractérisée** de sorte que plusieurs tiges (3,4) sont prévues au niveau du corps magnétique;
Que le corps magnétique est disposé de sorte que la tension magnétique est plus grande à titre étagé avec chaque tige suivante (3,4) du corps magnétique avec plusieurs tiges (3,4) où la tension magnétique déplace les parties mobiles (5) ;
Que la tension est produite lors du passage du flux des rotors à travers les enroulements connectés parallèlement ou successivement (11-14) au niveau du corps magnétique;
Que les enroulements au niveau du corps magnétique entre les tiges sont disposés et que la tension magnétique produit une ligne d'étage par le biais de la commutation des éléments résistifs, donc un comportement gradin de la fermeture et de l'ouverture du contact en fonction de la force du courant des rotors où les tiges (4) présentent une intervalle d'air où s'y situent des parties mobiles (5) de la tige (4) où la partie mobile (5) de la tige respectif (4) est reliée à un contact mobile d'un groupe de contact (6,7,8,9).
